# EUROPEAN PATENT SPECIFICATION

(11) **EP 2 034 220 B1**
(45) Date of publication and mention of the grant of the patent: **07.07.2010**
(21) Application number: 08160517.2
(22) Date of filing: 16.07.2008
(51) Int. Cl.: F16H 9/18, F16H 63/06

(54) **V-belt type continuously variable transmission**
Stufenloses Keilriemengetriebe
Transmission variable continue par type de courroie en V

(30) Priority: 07.09.2007 JP 2007233303
(43) Date of publication of application: 11.03.2009
(73) Proprietor: Honda Motor Co., Ltd., Tokyo 107-8556 (JP)
(72) Inventor: Ishikawa, Hideo, Saitama 351-0193 (JP); Morita, Go, Saitama 351-0193 (JP); Ikeda, Naoki, Saitama 351-0193 (JP)
(74) Representative: Rupp, Christian

(56) References cited:
- EP-A- 1 767 827
- JP-A- 2007 024 240

## Description

The present invention relates to a V-belt type continuously variable transmission with a pulley-movable-half driving mechanism that is made compact in size, according to the preamble of claim 1.

A V-belt type continuously variable transmission that changes its gear ratio by use of an electric motor requires an appropriate layout of the electric motor, a pulley-control-unit reduction gear mechanism, a pulley-movable-half position sensor, and the like so as to form a compact power unit. In a conventional transmission of the type, in order to avoid the interference of the pulley-control-unit reduction gear mechanism with a flange of a threaded member for axial-direction movement of the pulley-movable-half driving mechanism, the pulley-control-unit reduction gear mechanism and the pulley-movable-half driving mechanism are disposed with a in-between distance that is long enough not to overlap these two mechanisms each other when viewed from a side. Such arrangement requires a longer distance between the electric motor and the threaded member for axial-direction movement, and results in a larger pulley-movable-half driving mechanism.

Such a V-belt type continuously variable transmission is known from Japanese Patent Application Publication No. 2007-24240 (Fig. 3)

The present invention aims to provide a structure that is capable of shortening the distance between the electric motor and the threaded member for axial-direction movement and to make the V-belt type continuously variable transmission more compact in size.

For the purpose of achieving the above-mentioned objects, a first embodiment of the present invention provides a V-belt type continuously variable transmission with the features of claim 1.

A second embodiment of the present invention provides the V-belt type continuously variable transmission according to claim 1 with the following additional characteristic features. A guide piece to restrict the rotation of the rotation stopper is disposed inside a transmission case. A resin shoe is attached to a portion of the rotation stopper which portion is in contact with the guide piece.

In the first embodiment of the present invention, the threaded member for axial-direction movement is restricted from rotating by means of the rotation stopper. The cutaway can be formed in the flange portion of the threaded member for axial-direction movement so as to avoid the interference of the reduction gear with the flange portion of the threaded member for axial-direction movement. The cutaway makes is possible to shorten the distance between the relevant shafts, so that the pulley movable-half driving mechanism can be made smaller in size. As a consequence, the power unit can be made more compact in size.

In the second embodiment of the present invention, the resin shoe helps the threaded member for the axial-direction movement to slide more smoothly in the axial direction thereof. In addition, the resin shoe can reduce the noise produced by the contact between the rotation stopper and the guide piece.
Fig. 1 is a side view of a motorcycle 1 on which a power unit P according to an embodiment of the present invention is mounted.
Fig. 2 is an enlarged view of a rear portion of the motorcycle 1.
Fig. 3 is a top plan view of the power unit P suspended from a rear-side portion of the motorcycle 1.
Fig. 4 is a side view of the power unit P.
Fig. 5 is a sectional view taken along the line A-A in Fig. 4.
Fig. 6 is a sectional view taken along the line B-B in Fig. 4.
Fig. 7 is an enlarged sectional view taken along the line VII-VII in Fig. 6.
Fig. 8 is a side view of a drive-pulley movable-half driving mechanism.
Fig. 9 is a perspective view of a male-thread cylindrical member 92 that is assembled to the drive-pulley movable half 67.
Fig. 10 is a perspective view of a ring-shaped member 93.
Fig. 11 is an enlarged sectional view of a driven pulley 13, a power-system reduction gear mechanism 16, and their peripheral members.

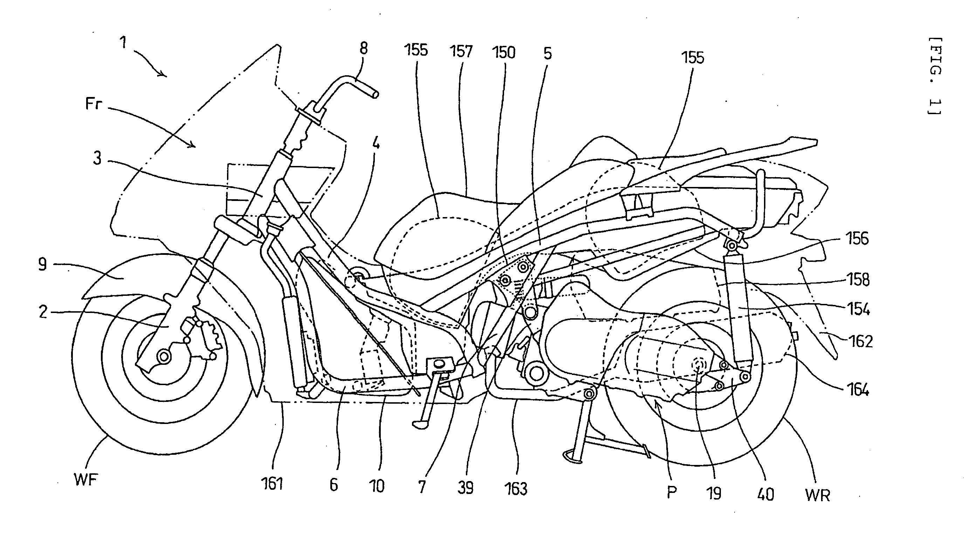

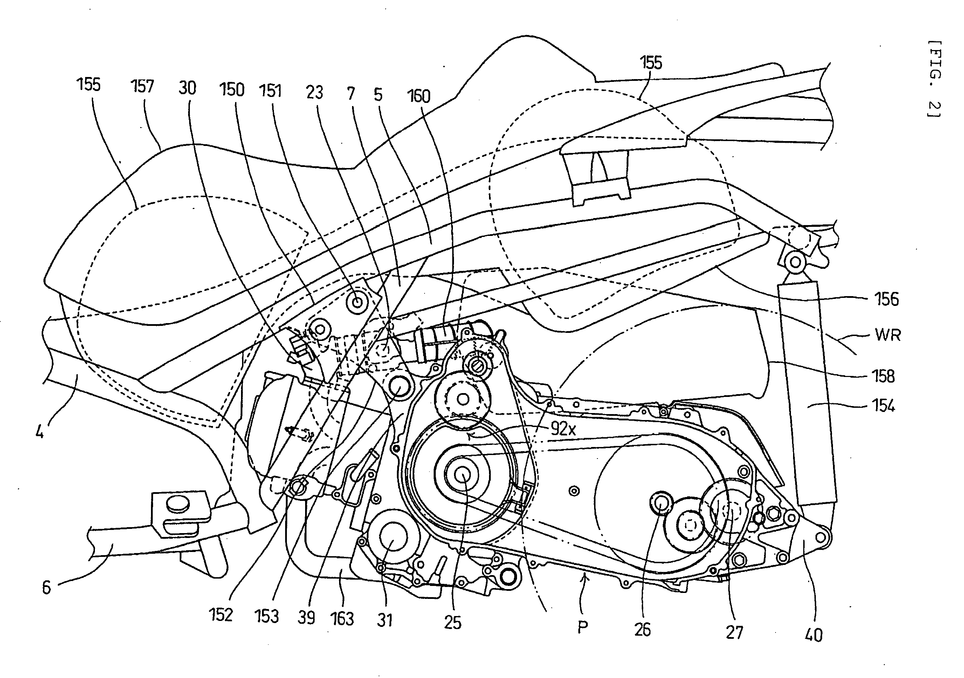

Fig. 1 is a side view of a motorcycle 1 on which a power unit P according to an embodiment of the present invention is mounted. Fig. 2 is an enlarged view of a rear portion of the motorcycle 1. Fig. 1 shows a vehicle-body frame Fr of the motorcycle 1 that includes a head pipe 3, a main frame 4, a right-and-left pair of rear frames 5, a down frame 6, and middle frames 7. The head pipe 3 supports a front fork 2, which is allowed to move rotationally. The main frame 4 extends downwards to the rear from the head pipe 3. Each of the rear frames 5 has one of its ends connected to a middle portion of the main frame 4, and extends upwards to the rear. The down frame 6 extends downwards from the head pipe 3, then turns rearwards, and connected to the lower end of the main frame 4. The middle frames 7 each connect the lower end of the main frame 4 and a middle portion of the rear frames 5 each. The front fork 2 pivotally supports a front wheel WF at the lower ends thereof. A steering handle bar 8 is coupled above the front fork 2. The front fork 2 supports a front fender 9 to cover upper front of the wheel. A fuel tank 10 is disposed between the main frame 4 and the down frame 6.

Now, refer also to Fig. 2. Each of pivot plates 150 is fixed to each side surfaces of the corresponding rear frame 5 and the corresponding middle frame 7. The pivot plates 150 each have a pivot shaft 151 to hold a suspension link 152. Engine hangers 39 are formed integrally with the power unit P. The suspension link 152, the engine hangers 39, and a support shaft 153 are used to suspend the power unit P in a swingable manner with its cylinder axis slightly upwards to the front. A rear cushion 154 is disposed between one of the rear frames 5 and a rear-end bracket 40 of the power unit P. A rear axle 19 extends rightwards from a rear portion of the power unit P, and a rear wheel WR is attached on the rear axle 19. The rear wheel WR is driven by the power unit P. A storage box 156 is disposed above the power unit P to store helmets 155 and the like. A riding seat 157 is disposed above the storage box 156. An air cleaner 158 is disposed at the right-hand side of and above the power unit P, and is connected to a throttle body 23 with a connection pipe 160 while an inlet pipe 30 is also connected to the throttle body 159. Fig. 1 also shows a vehicle-body cover 161 attached to the vehicle-body frame Fr and composed of plural, synthetic-resin members connected to one another. The vehicle-body cover 161 covers the power unit P and other apparatuses. In addition, a rear fender 162 is disposed at the rear side of the vehicle. A muffler 164 is disposed at the right-hand side of the vehicle, and is connected to an exhaust pipe 163 of the engine.

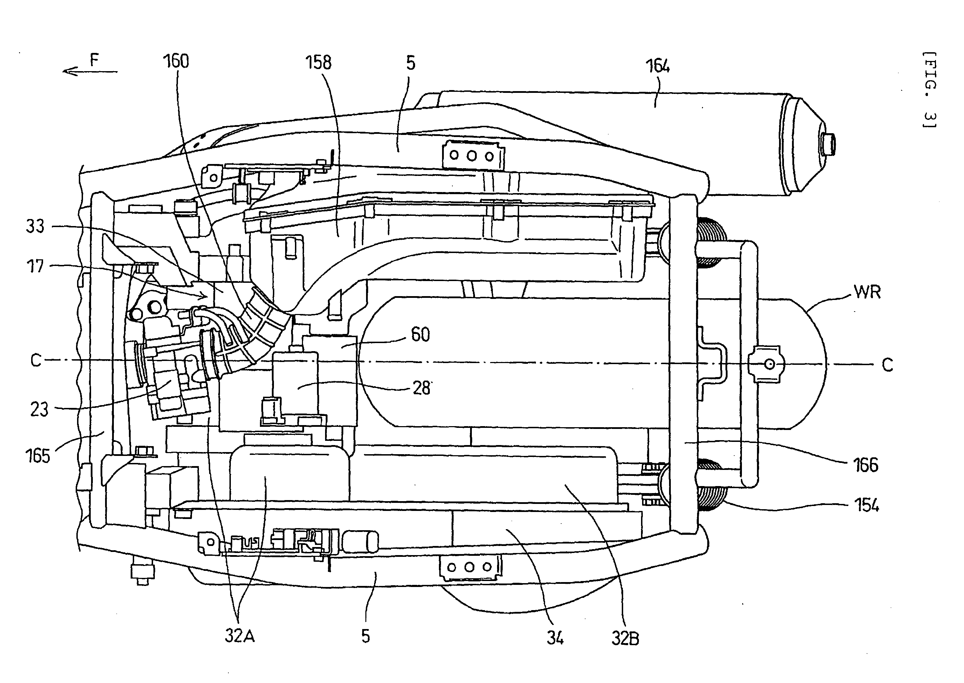

Fig. 3 is a top plan view of a power unit P that is suspended from a rear-side portion of the motorcycle 1. The arrow F in the drawing points out the front-side of the vehicle. The rear frames 5, 5 are disposed both on the right-hand side and on the left-hand side of the vehicle. Connecting frames 165 and 166 are provided to connect the two rear frames 5, 5. The rear wheel WR is aligned on the center line C-C of the vehicle. A transmission case 32B and a transmission-case cover 34 are disposed on the left-hand side of the vehicle, and the front-side of the transmission case 32B is a left-hand side crankcase 32A. The left-hand side crankcase 32A and a right-hand side crankcase 33 together form a crankcase 17. The air cleaner 158 is disposed on the right-hand side of the vehicle, and is connected to the throttle body 23 with the connecting pipe 160. A starter motor 60 and an electric motor 28 for drive-pulley control are disposed above the crankcase 17. The starter motor 60 is attached to the right-hand side crankcase 33 while the electric motor 28 for drive-pulley control is attached to the left-hand side crankcase 32A. The muffler 164 is disposed below the air cleaner 158 and at the right-hand side thereof.

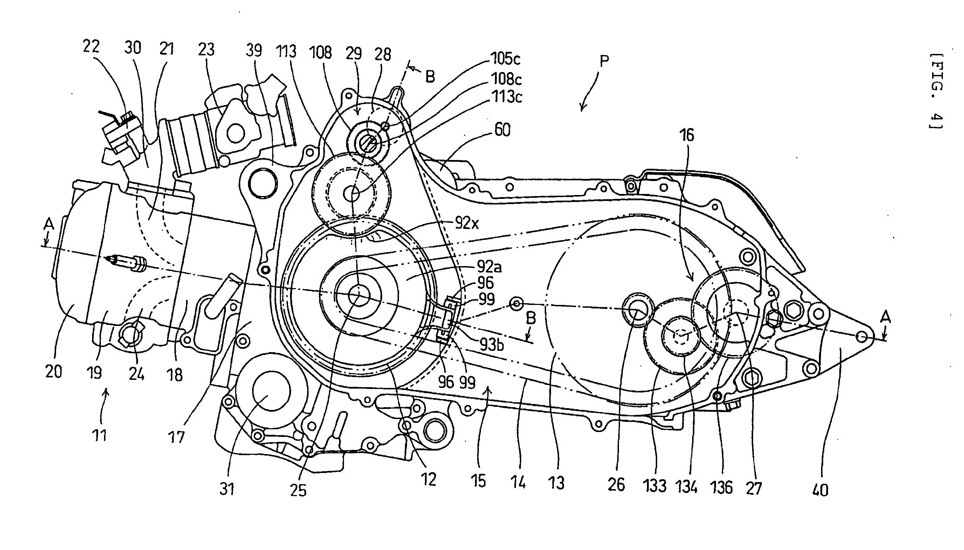

Fig. 4 is a side view of the power unit P, and illustrates the power unit P in a state where a part of its internal structure can be seen. An engine 11 occupies a front-side portion of the power unit P. A V-belt type continuously variable transmission 15 is disposed at a position extending contiguously rearwards from the engine 11. The V-belt type continuously variable transmission 15 includes a drive pulley 12, a driven pulley 13, and an endless V-belt 14 that is looped around the drive pulley 12 and the driven pulley 13. A power-system reduction gear mechanism 16 is disposed at the rear side of the V-belt type continuously variable transmission 15.

The engine 11 is a four-stroke cycle engine and is located in a front portion of the power unit P. To form the engine 11, a cylinder block 18, a cylinder head 19 and a cylinder-head cover 20 are stuck in this order forwards from the front-end face of a crankcase 17. The engine 11 thus formed tilts forwards to such a great extent that the engine 11 becomes nearly horizontal, lying on its side. An inlet port 21 is formed in the upper side of the cylinder head 19, and the inlet pipe 30 is attached to the inlet port 21. A fuel injection valve 22 is assembled to the inlet pipe 30. The throttle body 23, the air cleaner 158 (see Figs. 1 to 3) are also connected to the inlet pipe 30 at portions that are located at the rear side of the injection valve 22. An exhaust port 24 is formed in the lower side of the cylinder head 19. An exhaust pipe 163 (see Figs. 1 and 2) extends from the exhaust port 24. The exhaust pipe 162 is then bent rearwards, and is connected to the muffler 164 (see Figs. 1 and 3). An oil filter 31 is disposed under the crankcase 17.

In the V-belt type continuously variable transmission 15, a crankshaft 25 is provided as a drive shaft for the drive pulley 12. The shaft on which the driven pulley 13 rotates is a driven shaft 26, which serves also as the input shaft for the power-system reduction gear mechanism 16. The output shaft of the power-system reduction gear mechanism 16 is a rear axle 27 onto which the rear wheel WR (see Fig. 1) is attached. The electric motor 28 for drive pulley control and a reduction gear mechanism 29 for drive-pulley control unit are disposed above the crankshaft 25.

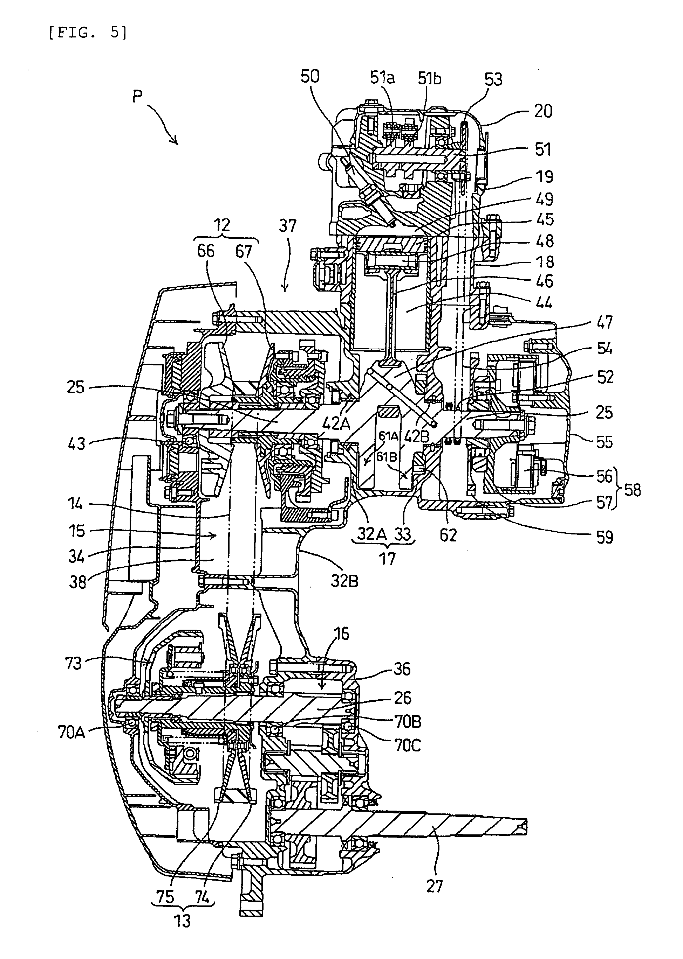

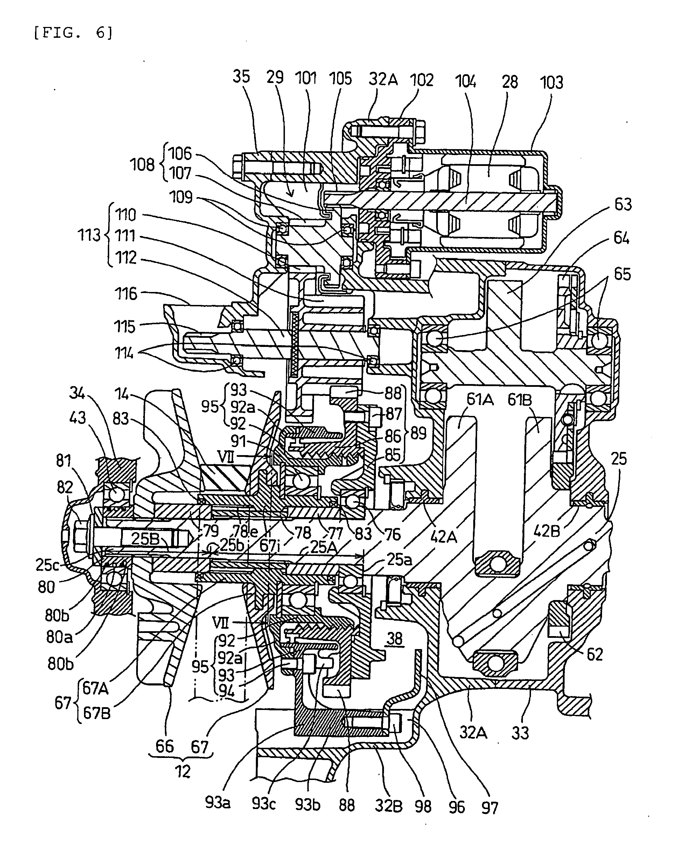

Fig. 5 is a cross-sectional view that is taken along the line A-A in Fig. 4. In the power unit P, the plural rotational shafts that extend in the right-and-left direction in Fig. 5 are supported by shell bodies including a left-hand side crankcase 32A, a transmission case 32B that is coupled contiguously to the rear side of the left-hand side crankcase 32A, a right-hand side crankcase 33, the transmission-case cover 34, a control-unit gear cover 35 (see Fig. 6), and a rear-side gear cover 36. Each of the transmission case 32B and the transmission-case cover 34 has a shape that is longitudinal in the front-and-rear direction of the vehicle. The control-unit gear cover 35 is coupled contiguously to the upper side of the transmission-case cover 34

The left-hand side crankcase 32A and the right-hand side crankcase 33 together form a crankcase 17. The transmission case 32B, the transmission-case cover 34, the control-unit gear cover 35 (see Fig. 6), and the rear-side gear cover 36 together form a transmission casing 37. In the transmission casing 37, the portion located between the transmission case 32B and the transmission-case cover 34 serves as a transmission chamber 38 in which the V-belt type continuously variable transmission 15 is installed. The portion located between the left-hand side crankcase 32A and the control-unit gear cover 35 serves as a portion in which the reduction gear mechanism 29 for the drive-pulley control unit is installed. The portion located between the transmission case 32B and the rear-side gear cover 36 is a portion in which the power-system reduction gear mechanism 16 is installed. The cylinder block 18, the cylinder head 19, and the cylinder-head cover 20 are stuck in this order forwards from the front end of the crankcase 17.

The crankshaft 25 is rotatably supported by the left-hand side crankcase 32A and the right-hand side crankcase 33 respectively with journal bearings 42A and 42B set in between. In addition, the left-hand end of the crankshaft 25 is rotatably supported by the transmission case cover 34 with a ball bearing 43 set in between. A cylinder bore 44 is formed in the cylinder block 18, and a piston 45 is slidably fitted into the cylinder bore 44. An end of a connecting rod 48 is pivotally supported by the crankshaft 25 by use of a crank pin 47. Likewise, the other end of the connecting rod 46 is pivotally supported by the piston 45 by use of a piston pin 48. The reciprocal movement of the piston 45 rotates the crankshaft 25. A combustion chamber 49 is formed in the bottom face of the cylinder head 19, which faces the top-end face of the piston 45. A spark plug 50 is installed from a side portion of the cylinder head 19 while the tip end of the spark plug 50 faces the combustion chamber 49.

At a position between the cylinder head 19 and the cylinder head cover 20, a cam shaft 51 is rotatably supported in parallel to the crankshaft 25. Cams 51a and 51b are disposed on the cam shaft 51. The cams 51a and 51b drive to open and close the intake and the exhaust valves. A drive sprocket 52 is disposed on a right-hand side of the crankshaft 25 while a driven sprocket 53 is disposed on the right-hand side end of the cam shaft 51. A cam chain 54 are looped around the drive sprocket 52 and the driven sprocket 53 so that the cam shaft 51 can be driven to rotate with the crankshaft 25.

A right-hand side crankcase cover 55 is disposed at the outer side of the right-hand side crankcase 33. A stator 56 is fixed on the inner surface of the right-hand side crankcase cover 55. A rotor 57 is fixed on the crankshaft 17 and surrounds the stator 56. The stator 56 and the rotor 57 together form an alternator 58. A starter driven gear 59 is disposed at a position adjacent to the alternator 58. By means of the starter driven gear 59, the crankshaft 25 can be driven to rotate by the starter motor 60 (see Figs. 3 and 4)

Fig. 5 shows a right-hand side crank web 61B and a balancer drive gear 62 that is adjacent to the right-hand side crank web 61B. The balancer drive gear 62 drives a balancer 63 (see Fig. 6) that rotates above the portion between the left-hand side crank web 61A and a right-hand side crank web 61B.

In Fig. 5, the transmission chamber 38 in which the V-belt type continuously variable transmission 15 is installed is formed between the transmission case 32B and the transmission-case cover 34. What serves as the drive shaft of the V-belt type continuously variable transmission 15 is the crankshaft 25. The left-hand side end portion of the crankshaft 25 sticks out from the left-hand side crankcase 32A into the transmission chamber 38 located at the left-hand side of the left-hand side crankcase 32A. The drive pulley 12 of the V-belt type continuously variable transmission 15 is disposed on this sticking-out portion. The drive pulley 12 is composed of a drive-pulley fixed half 66 and a drive-pulley movable half 67.

The driven shaft 26 of the V-belt type continuously variable transmission 15 is rotatably supported by the transmission-case cover 34, transmission case 32B, and the rear-side gear cover 36 with ball bearings 70A, 70B and 70C set in between respectively. The driven pulley 13 of the V-belt type continuously variable transmission 15 is disposed on this driven shaft 26 with a centrifugal clutch 73 placed in between. The driven pulley 13 is composed of a driven-pulley fixed half 74 and a driven-pulley movable half 75.

The endless V-belt 14 is looped around the drive pulley 12 and the driven pulley 13, and thus the rotation of the drive pulley 12 is transmitted to the driven pulley 13. When the number of revolution of the driven pulley 13 exceeds a predetermined number, the centrifugal clutch 73 disposed between the driven pulley 13 and the driven shaft 26 gets connected, and the driven shaft 26 starts revolving. The rotational torque of the driven shaft 26 is subjected to speed reduction in the power-system reduction gear mechanism 16, and then transmitted to the rear axle 27. The torque is then used for rotating the rear wheel WR fixed on the rear axle 27 to form a single body.

Fig. 6 is a sectional view taken along the line B-B in Fig. 4. The balancer 63 is supported by ball bearings 65, 65 and disposed above the portion located between the left-hand and the right-hand crank webs 61A and 61B. The balancer drive gear 62 is disposed on the crankshaft 25 so as to be adjacent to the right-hand side crank web 61B. A balancer driven gear 64 is fixed on a balancer shaft. The balancer drive gear 62 and the balancer driven gear 64 together drive to rotate the balancer 63.

The drive pulley 12 disposed on the crankshaft 25 that sticks into the transmission chamber 38 is composed of the drive-pulley fixed half 66 and the drive-pulley movable half 67. In the sticking-out portion of the crankshaft 25 into the transmission chamber 38, a first small-diameter portion 25A and a second small-diameter portion 25B are formed in order of the closeness to the center of the crankshaft 25. The first small-diameter portion 25A is located between shoulders 25a and 25b, while the second small-diameter portion 25B is located between the shoulder 25b and a shaft end 25c. The shaft-end side half portion of the first small-diameter portion 25A is splined, and so is the shaft-end side half portion of the second small-diameter portion 25B.

Onto the first small-diameter portion 25A, the inner race of a ball bearing 76, a first support sleeve 77, and a guide sleeve 78 are fitted. Meanwhile, onto the second small-diameter portion 25B, a second support sleeve 79, the drive-pulley fixed half 66, and a collar 80 are fitted. The sleeves 77, 78, 79, and the collar 80 are made of a steel while the drive-pulley fixed half 66 is made of an aluminum alloy. A screw hole is formed in the end portion of the crankshaft 25. To secure tightly the members mentioned above, a bolt 82 is screwed, into the screw hole with a washer 81 placed in between. The members thus fixed immovably in the direction in which the crankshaft 25 extends. Among the members mentioned above, the guide sleeve 78 has its inner surface splined, and is fitted onto the splined portion of the first small-diameter portion 25A of the crankshaft 25. The drive-pulley fixed half 66 has its inner surface of the center hole splined, and is fitted onto the splined portion of the second small-diameter portion 25B. Accordingly, the guide sleeve 78 and the drive-pulley fixed half 66 are thus fixed onto the crankshaft 25. The guide sleeve 78 and the drive-pulley fixed half 66 are not allowed to rotate independently of the crankshaft 25, but allowed to rotate only together with the crankshaft 25. Incidentally, the left-hand side end of the crankshaft 25 is supported by the transmission case cover 34 with the collar 80 and the ball bearing 43 set in between. A grease groove 80a is formed in the collar 80 for the purpose of preventing fretting wear. O-ring grooves 80b are also formed on both sides of the grease groove 80a, on which o-rings are fitted respectively.

The drive-pulley movable half 67 is composed of a steel movable-half hub portion 67A located at the center and an aluminum-alloy umbrella-shaped portion 67B. This integrated driven-pulley movable half 67 are formed by molding. Specifically, the umbrella-shaped portion 67B is molded to the end portion of the movable-half hub portion 67A that has been fabricated in advance.

A protruding spline 67i that protrudes inwards is formed in the inner circumference of the drive-pulley movable-half hub portion 67A. The protruding spline 67i is fitted into the outer-circumference spline 78e that is formed in the outer circumference of the guide sleeve 78. Since the outer-circumference spline 78e of the guide sleeve 78 is longitudinal in the axial direction, the protruding spline 67i is allowed to slide inside the grooved outer-circumference spline 78e in the axial direction. Accordingly, the drive-pulley movable half 67 is held so as to be incapable of rotating independently of the crankshaft 25, but is allowed to move in the axial direction. The grooved outer-circumference spline 78e of the guide sleeve 78 is greased, so as to achieve smooth sliding movement of the protruding spline 67i of the movable-half hub portion 67A. A sealing 83 is provided in each of the two end portions of the movable-half hub portion 67A for the purpose of preventing the leaking-out of the grease and of preventing the entry of dusts.

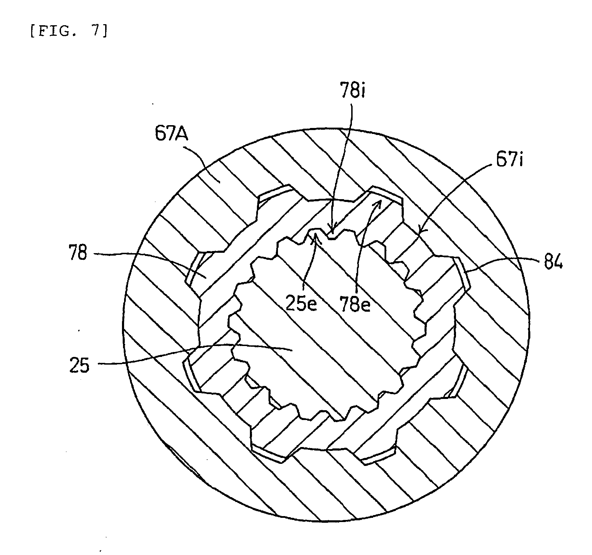

Fig. 7 is an enlarged sectional view taken along the line VII-VII in Fig. 6. The outer-circumference spline 25e formed in the crankshaft 25 meshes with an inner-circumference spline 78i formed in the guide sleeve 78. The outer-circumference spline 78e of the guide sleeve 78 also meshes with the protruding spline 67i of the movable-half hub portion 67A. Gaps 84 are formed between the outer circumferential surface of the guide sleeve 78 and the inner circumferential surface of the movable-half hub portion 67A so that the air and the grease can move along with the movement of the protruding spline 67i. By means of the splines 25e, 78i, 78e, and 67i, the drive-pulley movable half 67 rotates, together with the crankshaft 25, by the torque transmitted from the crankshaft 25.

In Fig. 6, the inner race of the ball bearing 76 is fitted onto the crankshaft 25, immovably in the axial direction. Meanwhile, the outer race of the ball bearing 76 is held by a ball-bearing outer-race holding member 85. Accordingly, the ball-bearing outer-race holding member 85 is immovable in the axial direction either. A flange portion is formed on the outer circumference of the ball-bearing outer-race holding member 85, and a female-thread cylindrical member 86 is bolted by a bolt 87 to the outer circumference of the flange portion so as to form a single body. A large-diameter gear 88 is formed in the outer circumference of the flange portion of the female-thread cylindrical member 86. The ball-bearing outer-race holding member 85, the female-thread cylindrical member 86, the bolt 87, and the large-diameter gear 88 together form a constant-position rotating threaded member 89. The constant-position rotating threaded member 89 is rotatable independently of the crankshaft 25 at a predetermined position on the crankshaft 25 in the axial direction thereof. The large-diameter gear 88 of the constant-position rotating threaded member 89 is driven to rotate by the electric motor 28 for drive-pulley control and by the reduction gear mechanism 29 for the drive-pulley control unit.

Onto the outer circumference of the movable-half hub portion 67A of the drive pulley 12, the inner race of a ball bearing 91 is fitted with the relative movement immovable in the axial direction. A male-thread cylindrical member 92 is provided to hold the outer race of the ball bearing 91 so as to form a single integrated body. The male-thread portion formed in the outer circumference of the male-thread cylindrical member 92 engages with the female-thread portion formed in the inner circumference of the female-thread cylindrical member 86.

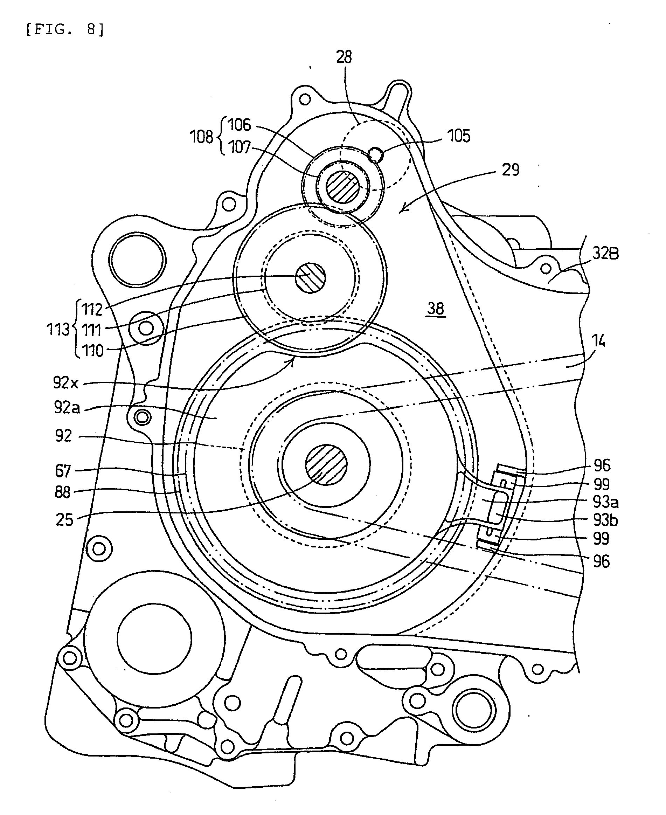

A flange portion 92a is formed in the male-thread cylindrical member 92, and a ring-shaped member 93 is fixed to the flange portion with a bolt 94. The ring-shaped member functions as a stopper to stop the rotation of the male-thread cylindrical member 92. A part of the circumference of the ring-shaped member 93 extends rearwards. The outer-end portion of the rear extending portion 93a turns to the right-hand side in the drawing and the extending portion further extends rightwards passing by the outer side of the large-diameter gear 88 of the constant-position rotating threaded member 89. This extending portion is a rotation stopper 93b. The male-thread cylindrical member 92 and the ring-shaped member 93 are bolted by a bolt 94, and integratedly form a threaded member for axial-direction movement 95. The rotation stopper 93b is placed between a pair of guide pieces 96, 96 (see also Fig. 8) that are formed so as to protrude from the inner surface of the transmission case 32B into the transmission chamber 38. The rotation stopper 93b is thus restricted its rotation by the guide pieces 96, 96. In addition, the rotation stopper 93b is guided by the guide pieces 96, 96, to move in the direction in which the crankshaft extends. Accordingly, when the constant-position rotating threaded member 89 rotates, the threaded member for axial-direction movement 95 that is contiguous to the rotation stopper 93a is restricted its rotation and the threaded member for axial-direction movement 95 is guided to move in the direction in which the crankshaft extends. Accordingly, the threaded member for axial-direction movement 95 moves in the axial direction of the crankshaft 25. The constant-position rotating threaded member 89 and the threaded member for axial-direction movement 95 together form a thread-operate type feed mechanism to drive the drive-pulley movable half.

A left-hand side stopper 93c is formed, around the base of the rearward extending portion 93a, integrally with the ring-shaped member 93. The left-hand side stopper 93c is used to detect the limit for the rightward movement of the threaded member for axial-direction movement 95. A right-hand side stopper 97 is attached, with a bolt 98, to the tip end of the rotation stopper 93b that extends from the ring-shaped member 93. The right-hand side stopper 97 is used to detect the limit for the leftward movement of the threaded member for axial-direction movement 95.

The constant-position rotating threaded member 89 is driven to rotate by the electric motor 28 for drive-pulley control and by the reduction gear mechanism 29 for the drive-pulley control unit. The revolution of electric motor 28 is automatically controlled in response to the throttle opening angle and to the engine revolution. The control-unit gear cover 35 is attached to the left-hand side of the left-hand side crankcase 32A. A control unit gear chamber 101 is formed in the portion located between the control-unit gear cover 35 and the left-hand side crankcase 32A. The electric motor 28 is attached to the right-hand side outer surface of the left-hand side crankcase 32A with an attachment plate 102 placed in between. A motor case 103 is provided to cover the electric motor 28. The electric motor 28 has a rotational shaft 104 in which a pinion 105 is carved. The pinion 105 enters the control-unit gear chamber 101. Since the electric motor 28 is mounted onto the outer surface of the left-hand side crankcase 32A, the maintenance work for the electric motor 28 is made easier.

A large-diameter gear 106 that meshes with the pinion 105 and a small-diameter gear 107 that is adjacent to the large-diameter gear 106 together form a first intermediate gear 108. The first intermediate gear 108 is rotatably supported by the left-hand side crankcase 32A and the control-unit gear cover 35 with ball bearings 109, 109 respectively set in between. A large-diameter gear 110 is provided so as to mesh with the small-diameter gear 107. A small-diameter gear 111 is adjacent to and is integrally formed with the large diameter gear 110. The large-diameter gear 110 and the small-diameter gear 111 are fitted onto a rotational shaft 112 and integrated together to form a second intermediate gear 113. The second intermediate gear 113 is rotatably supported by the left-hand side crankcase 32A and the control-unit gear cover 35 respectively with ball bearings 114, 114 set in between. The small-diameter gear 111 meshes with the large-diameter gear 88 of the constant-position rotating threaded member 89 described above. Fig. 4 shows a rotation center 105c of the pinion 105, a rotation center 108c of the first intermediate gear 108, and a rotation center 113c of the second intermediate gear 113.

A worm 115 is carved in the left-hand side end portion of the rotational shaft 112 of the second intermediate gear 113. The worm 115 meshes with an unillustrated worm wheel disposed at the tip end of the movable-half position sensor. An attachment portion 116 for the position sensor is formed on the control-unit gear cover 35 and at a position near the worm 115. The movable-half position sensor detects the amount of rotation of the second intermediate gear 113 by way of the meshing state of the worm gears. On the basis of the above-mentioned, detected amount of rotation of the second intermediate gear 113, the movable-half position sensor detects the position to which the drive-pulley movable half 76 moves.

Fig. 8 is a side view of a drive-pulley movable-half driving mechanism. The drive-pulley movable-half driving mechanism is a mechanism composed of the electric motor 28, the reduction gear mechanism 29 for the control unit, the constant-position rotating threaded member 89, and the threaded member for axial-direction movement 95. Fig. 8 shows, in addition to the electric motor 28 and the reduction gear mechanism 29 for the control unit, the large-diameter gear 88 as a component member of the constant-position rotating threaded member 89. Fig. 8 also shows the male-thread cylindrical member 92, the flange portion 92a of the male-thread cylindrical member 92, and the rearward extending portion 93a of the ring-shaped member 93 as component members of the threaded member for axial-direction movement 95. A ring-shaped portion of the ring-shaped member 93 is attached at a position of the male-thread cylindrical member 92 and beyond the flange portion 92a. The ring-shaped portion thus attached, however, cannot be seen directly in the drawing because these portions overlap each other.

Now, suppose that the outer-circumferential portion of the flange portion 92a of the male-thread cylindrical member 92 and the outer-circumferential portion of the ring-shaped member 93 can keep their respective normal and circular outer-circumferential shapes. In this case, these outer-circumferential portions are positioned so that the outer-circumferential portions may possibly interfere with the large-diameter gear 110 of the second intermediate gear 113. The rearward extending portion 93a of the ring-shaped member 93 functions as a rotation stopper for the male-thread cylindrical member 92, so that neither the outer-circumferential portion of the flange portion 92a nor the outer-circumferential portion of the ring-shaped member 93 will rotate. Accordingly, the portions that interfere with the large-diameter gear 110 of the second intermediate gear 113 can be cut away from the outer-circumferential portions of the flange portion 92a and of the ring-shaped member 93 because the cutting-away of these portions causes no functional inconveniences.

Fig. 8 shows the flange portion 92a of the male-thread cylindrical member 92 with a cutaway 92x formed in the above-described way along the contour formed by the leading edges of the gear teeth of the large-diameter gear 110 of the second intermediate gear 113. Likewise, a cutaway 93x is formed in the outer circumference of the ring-shaped member 93, which cannot be directly seen in the drawing since the ring-shaped member 93 overlaps and beyond the flange portion 92a of the male-thread cylindrical member 92. The forming of the cutaways 92x and 93x makes it possible to achieve a shorter distance between the crankshaft 25 and the rotational shaft 112 of the second intermediate gear 113. In addition, the large-diameter gear 88 of the constant-position rotating threaded member 89 can be made more compact in size. Accordingly, the drive-pulley movable-half driving mechanism can be made smaller in size, and, eventually, the power unit P can be made more compact in size.

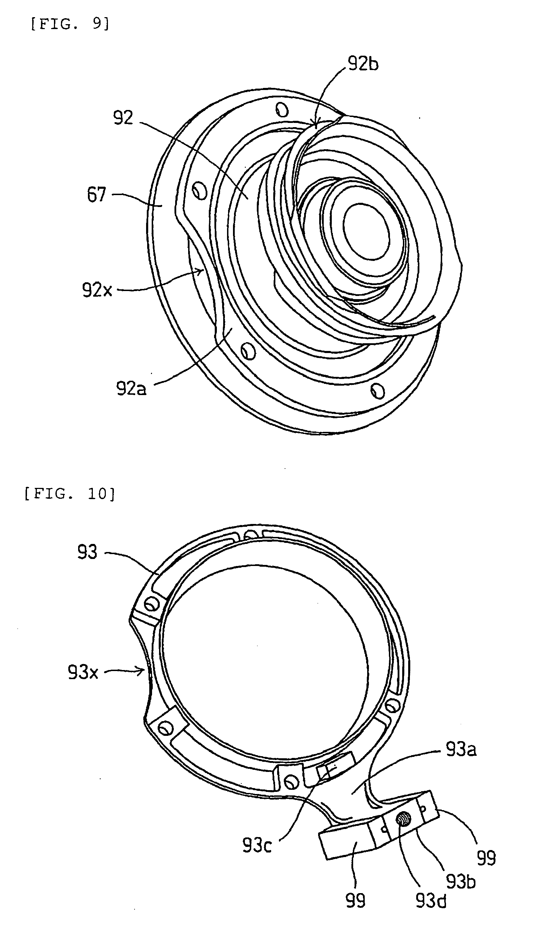

Fig. 9 is a perspective view of the male-thread cylindrical member 92 that is assembled to the drive-pulley movable half 67, and shows a threaded portion 92b of the male-thread cylindrical member 92. Fig. 10 is a perspective view of the ring-shaped member 93, and shows the rearwards extending portion 93a and the rotation stopper 93b. The Figs. 9 and 10 show, respectively, the cutaway 92x of the male-thread cylindrical member 92 and the cutaway 93x of the ring-shaped member 93. Forming these cutaways 92x and 93x allows the drive-pulley movable-half driving mechanism to be made smaller in size.

Fig. 10 shows that the rearwards extending portion 93a and the rotation stopper 93b protrude from a part of the outer circumference of the ring-shaped member 93. The left-hand side stopper 93c is integrally formed near the base of the rearwards extending portion 93a so as to detect the limit for the threaded member for axial direction movement 95 to move rightwards. A resin shoe 99 is attached to each of the two sides of the rotation stopper 93b. The resin shoes 99 help the rotation stopper 93b to slide in the axial direction smoothly, and such smooth sliding movement of the rotation stopper 93b, in turn, helps the threaded member for axial-direction movement 95 to move smoothly in the axial direction. In addition, the resin shoes 99 contribute to the reduction of the noise that is produced from the contact between the rotation stopper 93b and the pair of guide pieces 96, 96 (see Fig. 8) formed so as to protrude from the inner surface of the transmission case 32B into the transmission chamber 38. A threaded screw hole 93d is formed in the tip end of the rotation stopper 93b so as to be used for attaching a right-hand side stopper 97 (see Fig, 6).

Now, suppose a case where the electric motor 28 rotates in the forward direction in response to the control instruction. Then, the power is transmitted via the pinion 105, the first intermediate gear 108, and the second intermediate gear 113 so as to rotate the constant-position rotating threaded member 89. Accordingly, a thrust force in the axial direction of the crankshaft, received from the threaded portion of the constant-position rotating threaded member 89, acts on the threaded portion of the threaded member for axial-direction movement 95 which meshes with the threaded portion of the constant-position rotating threaded member 89. The thrust force moves the threaded member for axial-direction movement 95 in the axial direction of the crankshaft 25. The thrust force that acts on the threaded member for axial-direction movement 95 is transmitted, via the ball bearing 91, to the drive-pulley movable-half hub portion 67A. Accordingly, the drive-pulley movable-half 67 moves in the axial direction of the crankshaft 25, so that the distance between the drive-pulley movable half 67 and the drive-pulley fixed half 66 is narrowed. As a consequence, the V-belt 14 moves towards the outer circumference of the drive pulley 12. Conversely, suppose the opposite case, where the electric motor 28 rotates in the reverse direction in response to the control instruction. Then, through a process that is reversal to the one described above, the distance between the drive-pulley movable half 67 and the drive-pulley fixed half 66 is widened. As a consequence, the V-belt 14 moves towards the center of the drive pulley 12.

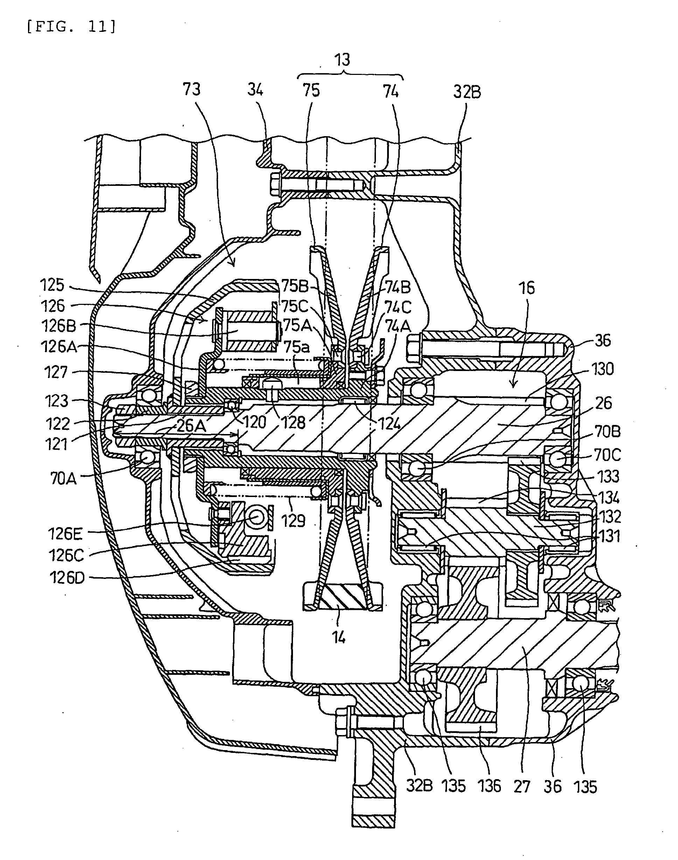

Fig. 11 is an enlarged sectional view showing the driven pulley 13, the power-system reduction gear mechanism 16, and the peripheral members of these two. The driven pulley 13, which is paired with the drive pulley 12 in the V-belt type continuously variable transmission 15, is composed of the driven-pulley fixed half 74 and the driven-pulley movable half 75. The fixed and the movable halves 74 and 75 are opposed to each other and are supported on the driven shaft 26. The driven-pulley fixed half 74 is an integrated body in which an aluminum-alloy umbrella-shaped portion 74B is coupled to a steel fixed-half hub portion 74A with a rivet 74C while the driven-pulley movable half 75 is an integrated body in which an aluminum-alloy umbrella-shaped portion 75B is coupled to a steel movable-half hub portion 75A with a rivet 75C.

The driven shaft 26 is rotatably supported by the transmission-case cover 34, the transmission case 32B, and the rear-side gear cover 36 respectively with the ball bearings 70A, 70B, and 70C set in between. A left-hand side portion of the driven shaft 26 is formed into a small-diameter portion 26A. A ball bearing 120, a support sleeve 121, and a collar 122 are fitted onto the small-diameter portion 26A in this order, and are fastened to one another to form a unit with a nut 123 that is screwed in the end portion of the driven shaft 26. The support sleeve 121 is splined to fit onto the driven shaft 26. The ball bearing 70A is set between the transmission-case cover 34 and the collar 122.

The base portion of a bowl-shaped clutch outer 125 of the centrifugal clutch 73 is welded to the support sleeve 121, so that the clutch outer 125 rotates together with the driven shaft 26. The driven-pulley fixed-half hub portion 74A is supported on the outer circumference of the driven shaft 26 at a position located at the right-hand side of the clutch outer 125. The ball bearing 120 and a needle bearing 124 are set between the driven shaft 26 and the driven-pulley fixed-half hub portion 74A so that the driven-pulley fixed-half hub portion 74A can rotate independently of the driven shaft 26.

A support plate 126A is fixed to the left-hand end of the fixed-half hub portion 74A with a nut 134. The support plate 126A forms a part of a clutch inner 126 of the centrifugal clutch 73. The support plate 126A pivotally supports, with a pivot 126B, an arm 126C at the base-end portion thereof. A clutch shoe 126D is fixed to the tip end of the arm 126C. The arm 126C is biased by a spring 126E towards a side so that the clutch shoe 126D can move away from the inner circumferential surface of the clutch outer 125.

The movable-half hub portion 75A that supports the driven-pulley movable half 75 is disposed on the outer circumference of the fixed-half hub portion 74A that supports the clutch inner 126. The movable-half hub portion 75A thus disposed is capable of sliding in the axial direction. A guide hole 75a that is longitudinal in the axial direction is formed in the movable-half hub portion 75A. A guide pin 128 that protrudes from the fixed-half hub portion 74A engages with the guide hole 75a, and is allowed to move sliding freely. Accordingly, the guide pin 128 restricts the movable-half hub portion 75A from rotating independently of the fixed-half hub portion 74A. Meanwhile, the movable-half hub portion 75A, thus guided by the guide pin 128 and the guide hole 75a, is capable of sliding on the fixed-half hub portion 74A in the axial direction. A coil spring 129 is set between the movable-half hub portion 75A and the support plate 126A fixed to the fixed-half hub portion 74A to form an integrated body. The coil spring 129 biases the movable-half hub portion 75A towards the right-hand side so that the movable-half umbrella-shaped portion 758 can approach the fixed-half umbrella-shaped portion 74B.

In the driven pulley 13 configured as described above, the movable-half umbrella-shaped portion 75B rotates together with the fixed-half umbrella-shaped portion 74B. In addition, the movable-half umbrella-shaped portion 75B is slidable freely in the axial direction, and is biased, by the coil spring 129, towards a side so that the movable-half umbrella-shaped portion 75B can approach the fixed-half umbrella-shaped portion 74B. The V-belt 14 is looped around the portion created between the two umbrella-shaped portions 74B and 75B, the umbrella-shaped portion 74B of the driven-pulley fixed half 74 and the umbrella-shaped portion 75B of the driven-pulley movable half 75, that are opposed to each other. The effective diameter of the driven pulley 13 varies in response to the change in the effective diameter of the drive pulley 12, so that continuous variation in drive ratio is accomplished.

When the driven pulley 13 revolves at a speed exceeding a predetermined revolution, the clutch shoe 126D of the clutch inner 126 of the centrifugal clutch 73 is brought into contact with the inner circumferential surface of the clutch outer 125. The clutch inner 126 and the clutch outer 125 thus start rotating together, so that the power is transmitted from the driven pulley 13 to the driven shaft 26 and is inputted into the power-system reduction gear mechanism 16.

The power-system reduction gear mechanism 16 ranging from the driven shaft 26 to the rear axel 27 includes gears each of which is disposed on the corresponding one of the following three rotational shafts. A first one of the three shafts is the right-hand side half of the driven shaft 26 of the V-belt type continuously variable transmission 15. A small-diameter gear 130 is formed in this driven shaft 26. A second one of the three shafts is an intermediate shaft 132 that is rotatably supported by the transmission case 32B and the rear-side gear cover 36 with needle bearings 131, 131 set in between. A large-diameter gear 133 that meshes with the small-diameter gear 130 of the driven shaft 26 is fitted onto the intermediate shaft 132 so as to form a unit. In addition, a small-diameter gear 134 is carved in the intermediate shaft 132 per se. A third one of the three shafts is the rear axle 27 that is rotatably supported by the transmission case 32B and the rear-side gear cover 36 respectively with ball bearings 135, 135 set in between. A large-diameter gear 136 that meshes with the small-diameter gear 134 of the intermediate shaft 132 is fitted onto the rear axle 27. With this configuration, the torque of the driven shaft 26 is transmitted to the rear axle 27 while the speed of the torque is reduced by the power-system reduction gear mechanism 16. The rear wheel WR (see Fig. 1) is fixed on the rear axle 27 to form a single body, and the rear wheel WR is driven to rotate by a drive force that is produced in the engine and transmitted via the transmission.

As has been described in detail thus far, this embodiment of the present invention brings about the following advantageous effects.
(1) In this embodiment, the ring-shaped member 93 that has the rotation stopper 93b is attached to the flange portion 92a of the male-thread cylindrical member 92 of the threaded member for axial-direction movement 95, so that the rotation of the threaded member for axial-direction movement 95 can be restricted. In addition, the cutaways 92x and 93x are formed, along the contour that is formed by the leading edges of the teeth of the control-unit reduction gear 110, respectively, in the outer circumference of the flange portion 92a and in the outer circumference of the ring-shaped member 93. Accordingly, the outer-circumferential portions of the members 92a and 93 can be prevented from interfering with the reduction gear 110. As a consequence, the distance between the shafts related to these members can be shortened, the driving mechanism for the drive-pulley movable half 67 can be made smaller in size, and the power unit P can be made more compact in size.
(2) In this embodiment, the guide pieces 96, 96 to restrict the rotation of the rotation stopper 93b are disposed inside the transmission casing 37. In addition, the resin shoes 99 are attached to the two sides of the rotation stopper 93b, which sides are in contact with the guide pieces 96, 96. With the use of the resin shoes 99, the rotation stopper 93b can slide smoothly in the axial direction. As a consequence, the threaded member for axial-direction movement 95 can move smoothly in the axial-direction. Furthermore, the smooth movement contributes to the reduction of the noise that is produced from the contact between the rotation stopper 93b and the pair of guide pieces 96, 96.

P...POWER UNIT; 12...DRIVE PULLEY; 13...DRIVEN PULLEY; 14...V-BELT; 15...V-BELT TYPE CONTINUOUSLY VARIABLE TRANSMISSION; 28...ELECTRIC MOTOR; 29...REDUCTION GEAR MECHANISM FOR CONTROL UNIT; 32A...LEFT-HAND SIDE CRANKCASE; 32B...TRANSMISSION CASE; 33...RIGHT-HAND SIDE CRANKCASE; 34...TRANSMISSION-CASE COVER; 35...CONTROL-UNIT GEAR COVER; 37...TRANSMISSION CASING; 38...TRANSMISSION CHAMBER; 66...DRIVE-PULLEY FIXED HALF; 67...DRIVE-PULLEY MOVABLE HALF; 67A...MOVABLE-HALF HUB PORTION; 67B...UMBRELLA-SHAPED PORTION; 86...FEMALE-THREAD CYLINDRICAL MEMBER; 88...LARGE-DIAMETER GEAR; 89...CONSTANT-POSITION ROTATING THREADED MEMBER; 92...MALE-THREAD CYLINDRICAL MEMBER; 92a...FLANGE PORTION; 92x...CUTAWAY; 93...RING-SHAPED MEMBER; 93a...REARWARDS EXTENDING PORTION; 93b...ROTATION STOPPER; 93x...CUTAWAY; 95...THREADED MEMBER FOR AXIAL-DIRECTION MOVEMENT; 96...GUIDE PIECE; 99...RESIN SHOE.

## Claims

1. A V-belt type continuously variable transmission (15) comprising:
a pulley fixed half (66) fixed onto and supported by a rotational shaft;
a pulley movable half (67) supported on the rotational shaft to be movable in the axial direction;
a belt held by and between the pulley fixed half (66) and the pulley movable half (67); and
a screw-type feeding mechanism including:
a constant-position rotating threaded member (89) supported on the rotational shaft so as to be unmovable in the axial direction, the constant-position rotating threaded member (89) being driven to rotate by an electric motor (28) via a reduction gear mechanism; and
a threaded member for axial-direction movement (95) held by the pulley movable half (67) so as to be movable in the axial direction of the rotational shaft, while being fitted to the constant-position rotating threaded member (89) so as to be prohibited from rotating about the rotational shaft,
wherein
a rotation stopper (93b) is formed in a flange portion (92a) of the threaded member for axial-direction movement (95) to restrict the rotation of the threaded member for axial-direction movement (95), and **characterized in that**
the flange portion (92a) is provided with a cutaway (92x, 93x) formed along the contour of the leading edges of teeth of a reduction gear.

2. The V-belt type continuously variable transmission (15) according to claim 1, wherein
a guide piece (96) to restrict the rotation of the rotation stopper (93b) is disposed inside a transmission case (32b), and
a resin shoe (99) is attached to a portion of the rotation stopper (93b), the portion being in contact with the guide piece (96).

## Patentansprüche

1. Stufenloses Keilriemengetriebe (15), das aufweist:
eine fixierte Riemenscheibenhälfte (66), die auf einer Drehwelle fixiert ist und von dieser gehalten wird;
eine bewegbare Riemenscheibenhälfte (67), die auf der Drehwelle gehalten wird, um in der Axialrichtung bewegbar zu sein;
einen Riemen, der von und zwischen der fixierten Riemenscheibenhälfte (66) und der bewegbaren Riemenscheibenhälfte (67) gehalten wird; und
einen Schrauben-Vorschubmechanismus, der umfasst:
ein mit konstanter Position rotierendes Gewindeelement (89), das auf der Drehachse so gehalten wird, das es in der Axialrichtung unbeweglich ist, wobei das mit konstanter Position rotierende Gewindeelement (89) von einem Elektromotor über einen Untersetzungsgetriebemechanismus angetrieben wird, um zu rotieren; und
ein Gewindeelement (95) für die Bewegung in der Axialrichtung, das von der bewegbaren Riemenscheibenhälfte (67) gehalten wird, so dass es in der Axialrichtung der Drehwelle bewegbar ist, während es an das mit konstanter Position rotierende Gewindeelement (89) montiert ist, so dass es davon abgehalten wird, um die Drehwelle zu rotieren,
wobei
ein Rotationsanschlag (93b) in einem Flanschabschnitt (92a) des Gewindeelements (95) für die Bewegung in der Axialrichtung ausgebildet ist, um die Rotation des Gewindeelements (95) für die Bewegung in der Axialrichtung zu beschränken, und **dadurch gekennzeichnet, dass**
der Flanschabschnitt (92a) mit einem Ausschnitt (92x, 93x) versehen ist, der entlang des Umrisses der führenden Ränder von Zähnen eines Untersetzungsgetriebes ausgebildet ist.

2. Stufenloses Keilriemengetriebe (15), gemäß Anspruch 1, wobei
ein Führungsstück (96) zum Beschränken der Rotation des Rotationsanschlags (93b) im Inneren eines Getriebegehäuses (32b) angeordnet ist, und
ein Harzvorsatzteil (99) an einem Abschnitt des Rotationsanschlags (93b) angebracht ist, wobei der Abschnitt in Kontakt mit dem Führungsstück (96) ist.

## Revendications

1. Transmission à variation continue de type à courroie en V (15) comprenant :
une demi-poulie fixe (66) fixée sur et supportée par un arbre de rotation ;
une demi-poulie mobile (67) supportée sur l'arbre de rotation pour être mobile dans la direction axiale ;
une courroie maintenue par et entre la demi-poulie fixe (66) et la demi-poulie mobile (67) ; et
un mécanisme d'alimentation de type à vis comprenant :
un élément fileté rotatif à position constante (89) supporté sur l'arbre de rotation afin d'être immobile dans la direction axiale, l'élément fileté rotatif à position constante (89) étant entraîné pour tourner grâce à un moteur électrique (28) via un mécanisme d'engrenages réducteurs ; et
un élément fileté pour le mouvement dans la direction axiale (95) maintenu par la demi-poulie mobile (67) afin d'être mobile dans la direction axiale de l'arbre de rotation, tout en étant monté sur l'élément fileté rotatif à position constante (89) afin de ne pas pouvoir tourner autour de l'arbre de rotation,
dans laquelle :
une butée de rotation (93b) est formée dans une partie de rebord (92a) de l'élément fileté pour le mouvement dans la direction axiale (95) afin de limiter la rotation de l'élément fileté pour le mouvement dans la direction axiale (95), et **caractérisée en ce que** :
la partie de rebord (92a) est prévue avec une découpe (92x, 93x) formée le long du contour des bords d'attaque des dents d'un engrenage réducteur.

2. Transmission à variation continue de type à courroie en V (15) selon la revendication 1, dans laquelle :
une pièce de guidage (96) pour limiter la rotation de la butée de rotation (93b) est disposée à l'intérieur d'un carter de transmission (32b), et
un patin en résine (99) est fixé sur une partie de la butée de rotation (93b), la partie étant en contact avec la pièce de guidage (96).
